# EUROPEAN PATENT APPLICATION

(11) **EP 1 881 199 A1**
(43) Date of publication of application: **23.01.2008**
(21) Application number: 06117516.2
(22) Date of filing: 19.07.2006
(51) Int. Cl.: F04B 53/14

(54) **Pumping apparatus having a piston with a diamond like carbon coating**

(71) Applicant: Agilent Technologies, Inc., Santa Clara, CA 95051 (US)
(72) Inventor: HAERTL, Hans-Georg, 76227, Karlsruhe (DE)
(74) Representative: Barth, Daniel Mathias

(57) **Abstract**

A pumping apparatus is provided, which comprises a piston (1) for reciprocation in a pump working chamber (3), a valve, coupled to said pump working chamber (3) in order to permit liquid flow only unidirectional and a drive unit for reciprocating said piston (1). The liquid in said pump working chamber (3) is compressed to a high pressure, at which compressibility of the liquid becomes noticeable. The piston (1) is at least partially coated with a diamond-like carbon coating (2), adapted to provide a reduced abrasion of said piston (1).

## Description

The present invention relates to a pumping apparatus.

### BACKGROUND ART

A number of pumping devices is described in the state of the art, said pumping devices being used for transfer of liquid in low- or high pressure apparatuses. Piston- or plunger pumps adapted for usage in said low- or high pressure devices comprise one or more a pistons which are arranged to perform reciprocal movements in a corresponding pump chamber, thereby compressing the fluid within said pump chambers. The reciprocation is repeated thousand fold during the lifetime of the pump, thereby causing wear, abrasion and, hence, changes of the material and surface properties to the piston.

A liquid chromatography pumping system is described in EP 0,309,596 B1 to Strohmeier and Witt, e.g., depicting a pumping apparatus comprising a dual piston pump system for delivering liquid at high pressure, e.g., for solvent delivery in liquid chromatography.

Further pumping systems with coated components are disclosed in the state of the art: WO 06,005,399 A1 to Beck et al. refers to an axial piston engine with a wear-resistant carbon-containing layer on one of the sliding faces.

JP 2004,239,191 A2 to Kato et al. describes a hydraulic piston pump motor with a DLC (diamond-like carbon) coated film on a sliding surface of a shoe which slidably contacts said swash plate for reciprocally moving the pistons.

JP 2004,019,464 A2 to Narato discloses a hydraulic piston pump motor with a piston ring being coated with a thin film of DLC on its sliding surface to improve wear resistance.

DE 102,004,032,342 A1 to Fischer et al. discloses a method providing the outside extent surface of a piston ring base with a coating comprised of two layers, one of which being a wear protection layer.

US 2004,258,547 AA to Bayer et al. refers to a pump piston and a sealing ring with an additionally applied coating, predominantly formed of halogen-, silicon-, carbon-containing and/or metal-organic monomers.

WO 03,078,679 A1 to Teer concerns a coating and apparatus and method for its application. The coating is applied by chemical vapour deposition using a pulsed DC biased power supply, the coating having an initial metal layer followed by a transitional metal carbide layer and a DLC layer.

JP 2,000,320,670 A2 to Kitago et al., a piston with a hardening layer is described, comprising a DLC layer which is applied succeeding to soft nitriding and polishing of a steel piston.

### DISCLOSURE

It is an object of the invention to provide an improved pumping apparatus. The object is solved by the independent claims. Further embodiments are shown by the dependent claims.

According to embodiments of the present invention, a pumping apparatus is described which is adapted to deliver liquids under high pressure in devices such as, e.g., devices for analysis of chemical or biochemical compounds, working with liquids or liquid samples being injected under high pressure. Said pumping apparatus is composed of one or more pistons, each of which being movably arranged in a corresponding pump working chamber. Moving of a piston is performed by a drive unit having a piston holder; accordingly the reciprocal movement of the piston in the chamber can be carried out for a plurality of strokes. Each strike provides a liquid compression; the plurality of strikes demanding an increased material resistance with respect to the piston wear. A diamond-like carbon (DLC) coating on the piston surface advantageously provides an improved wear resistance, adapted to provide a reduced abrasion of the piston. Said improved wear resistance is based on a hardening of the surface due to the coating, associated with an optimized surface smoothness and evenness leading to friction reduction.

A further embodiment of the present invention comprises two pistons arranged in a dual serial or dual parallel mode in order to provide continuous pumping by performing pump cycles. Due to an advantageously provided coating of the piston surfaces, which coating reduces friction of the pistons and optimizes surface durability, an optimized performing of pump cycles can be carried out.

A further embodiment refers to a high pressure liquid chromatography device to perform injecting of liquid into a chromatograph. The herein used pumping apparatus has a piston for repeated reciprocation into a pump working chamber, which piston is advantageously coated with a diamond-like carbon coating, providing a hard and even piston surface which helps prolonging the lifetime of the piston. Furthermore, the highly precise pumping of said device, which is used for injecting micro-volumes pumping, is further optimized since the piston cay move nearly friction-free.

Further embodiments of the present invention refer to a high pressure liquid chromatography device comprising a liquid pumping apparatus having a DLC coated piston, which may be made of sapphire, being chemically inert and having an improved surface with respect to abrasion, and showing a reduced brittleness.

### DETAILED DESCRIPTION

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

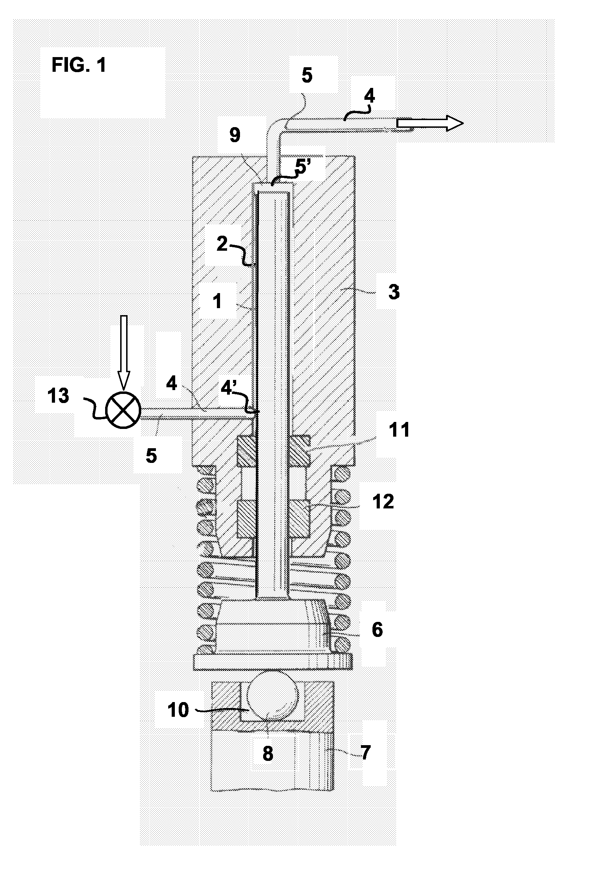

- FIG. 1: schematically shows a pumping apparatus comprising a coated piston.

In the following, generally pumping apparatuses for delivering liquid at a high pressure are described. The pressure which affects the liquid provides a noticeable compressibility of the liquid, which noticeable compression is achieved in that a piston of the pumping apparatus is reciprocated in a pump working chamber containing the respective liquid. The pump working chamber may be coupled to a valve in order to permit liquid flow unidirectional only. Driving of the piston may be performed by a drive unit which permits pressurizing of the liquid in said pump working chamber to high pressure. Advantageously, a diamond-like carbon coating covers the parts of the piston which are the most susceptible to abrasion; the smooth and even DLC coating reduces friction and damages due to friction.

FIG. 1 depicts a pumping apparatus comprising a piston 1, which is reciprocated in a pump working chamber 3, having a cylindrical inner bore 9 and having an inlet port 4' and an outlet port 5'. An inlet valve 13 is connected via a capillary 5, which has an inner bore 4, to said inlet port 4' of the pump working chamber 3, to permit liquid flow only unidirectional into the pump working chamber 3. The reciprocating movements are driven by a drive unit (not shown herein), which operates the piston holder 6 via the ball 8 which is embedded in a recess 10. The ball 8 is operated by an actuator 7. Since the piston holder 6 is mounted to the piston 1, the drive unit may affect the piston 1 via the piston holder 6 to perform said moving of the piston into the pump working chamber 3. Furthermore, a seal 11 is provided for sealing off the pump working chamber 3 at the opening, through which the piston 1 moves into said pump working chamber 3, so that unwanted liquid flow-out is prevented. Guiding of the piston1 into the pumping chamber 3 is supported by the guiding element 12.

The liquid in said pump working chamber 3 is compressed to a high pressure before being delivered via an outlet port 5' and via a capillary 5 with an inner bore 4 being attached to said outlet port 5', into a liquid receiving device.

Generally, wear and abrasion are well known phenomena causing material destruction of a plurality of components in driving units, pumps and other devices. Since the piston 1 performs said reciprocating movement manifold during its lifetime, it is subjected to said abrasion due to friction loading, accordingly risking to be damaged from wear. Advantageously reducing of said destructive effects is achieved by optimizing the surface durability.

Therefore, the piston 1 is provided with a diamond-like carbon (DLC) coating 2, which herein covers the piston 1 along its length, leaving the top and the bottom of the piston 1 uncovered. The diamond-like carbon (DLC) coating 2 might as well cover the piston 1 completely. Due to its abrasion reducing effects, the DLC coating 2 may advantageously prolong the lifetime of the piston 1.

The pumping apparatus of the embodiments of the present invention may be comprised of one or more pistons: A pumping apparatus being comprised of two pistons might be constructed such that said two pistons are arranged in a dual serial mode, permitting thereby to provide a continuous pumping by performing pump cycles. A pumping apparatus with two pistons accordingly comprises two pump working chambers, such that the first piston can be reciprocally moved into, a first pump working chamber having an inlet port and an outlet port, and that a second piston can be reciprocally moved into a second pump working chamber, having an in- and an outlet, too. A conduit coupling is arranged between the outlet port of the first pump working chamber and the inlet port of the second pump working chamber, thus a liquid communication from the first to the second pump working chamber is provided.

An inlet valve, which is connected to the inlet port of the first pump working chamber, permits liquid flow only unidirectional from a liquid source such as, e.g., a sample reservoir, into said first pump working chamber, whereas an the outlet valve, which is connected to the outlet port of said first pump working chamber, prevents returning of a liquid into said first pump working chamber. Thus, only unidirectional liquid flow from the fist into said second pump working chamber is permitted.

Reciprocation of a the first and the second pistons is performed by usage of a driving unit which is provided with a piston holder per piston, said piston being mounted on the corresponding holder and being coated with DLC in order to have an optimized resistance with respect to abrasion.

The pumping apparatuses of the embodiments of the present invention are adapted to work under high pressure, they may be designed to stand pressures of up to 200 bar, any may be constructed to stand even 2000 bar, and they may be equipped with an additional option to perform pumping at a selectable flow rate. Said pumping apparatuses may be used in liquid chromatography devices, in particular in high pressure liquid chromatography (HPLC) devices. In an HPLC device, the pumping apparatus may serve to perform injecting of liquid into the chromatograph.

Generally, the pistons of the herein referred embodiments can be made of materials such as sapphire, ceramics and metals such as steel. The choice of the piston material depends on the technical application which is carried out using the pumping apparatus: A pumping apparatus used for pumping oil or oily liquids may be equipped with a piston made of steel, or made of another metal or material having a rough surface. It must be noticed, that "rough" herein means a roughness provided by micro- or nanoscale recession. The pumped oil molecules fill even the tiniest micro- or nano-pores or scratches being present in the rough materials' surface and, hence, smoothens it.

On the contrary, other liquids, in particular solvents such as Acetonitril, Tetrahydrofurane, Hexane or other solvents used particularly in HPLC technology have properties which rather clean the surfaces of the aforementioned rough piston materials since they are strong solvents, dissolving and removing molecules being present in said micro recesses. Accordingly, the surface roughness becomes even rougher.

So, sapphire is a well known and popular material for producing pistons for usage in the above HPLC pumping apparatuses: The sapphire material is very even and smooth, hard and chemically inert, therefore an ideal material for the use in HPLC technology, but it inheres a certain brittleness. Applying of an at least partial DLC coating on the sapphire piston might therefore reduce abrasion, increase wear resistance, and, might additionally reduce the tendency of being damaged by brittle fraction. Furthermore, the surface roughness remains even and smooth since the sapphire material provides an ideal under-surface for the DLC coating.

On the other hand, the sapphire material is an exclusive material which needs a careful processing. Thus, another option to obtain an optimized HPLC piston might be the use of the above materials ceramics and steel: These materials have to be prepared using an intense smoothing and polishing in case of usage for HPLC technologies, what can be done easily due to the good processibility of these materials. The polished material is very smooth then, but prone to wear. Applying DLC can lead to an advantageously increased wear resistance, but the DLC layer should be applied to a well polished surface; otherwise the roughness would be set forth through the DLC layer. A well polished and DLC-coated surface of a piston comprises furthermore the advantages of chemical inertness and of having a low friction.

The DLC coating can have a thickness ranging from 0.1 to 10 micrometer, a preferred range of thickness is 0.2 to 5 micrometer, depending on the piston base material and depending on what the piston is intended to be used for. After all, advantageously the minimum thickness of 0.1 should be provided in order to obtain a homogeneous and tightly closed coating layer.

## Claims

1. A pumping apparatus comprising
a piston (1) for reciprocation in a pump working chamber (3),
a valve, coupled to said pump working chamber (3), to permit liquid flow only unidirectional,
a drive unit for reciprocating said piston (1),
wherein:
- the liquid in said pump working chamber (3) is compressed to a high pressure, at which compressibility of the liquid becomes noticeable, and
- said piston (1) is at least partially coated with a diamond-like carbon coating (2), adapted to provide a reduced abrasion of the piston (1).

2. The pumping apparatus of claim 1 or any one of the above claims, wherein the pump working chamber (3) has an inlet port (4')and an outlet port (5').

3. The pumping apparatus of claim 1 or any one of the above claims, wherein the valve is an inlet valve (13).

4. The pumping apparatus of claim 1 or any one of the above claims, wherein the drive unit comprises a piston holder (6) to which the piston (1) is mounted.

5. The pumping apparatus of claim 1 or any one of the above claims, comprising at least one of:
two pistons arranged in one of a dual serial or dual parallel mode, adapted to provide a continuous pumping by performing pump cycles;
a first piston for reciprocation in a first pump working chamber having an inlet port and an outlet port;
a second piston for reciprocation in a second pump working chamber having an inlet port and an outlet port,
a conduit coupling between an outlet port of a first pump working chamber and an inlet port of a second pump working chamber to provide a liquid communication from a first pump working chamber into a second pump working chamber;
an inlet valve connected to an inlet port of a first pump working chamber to permit liquid flow only unidirectional into said first pump working chamber;
the outlet valve connected to the outlet port of the first pump working chamber to permit liquid flow only unidirectional into said second pump working chamber;
the drive unit for reciprocating the first and the second piston,
wherein:
- the liquid in the first pump working chamber is compressed to said high pressure before delivery of the compressed liquid into the second pump working chamber,
- at least one of said first and second pistons that are reciprocated into said first and second working chambers, is at least partially coated with a diamond-like carbon coating, adapted to provide a reduced abrasion of the piston.

6. The pumping apparatus of claim 1 or any one of the above claims, wherein the piston (1) is made of one of the following: sapphire, ceramics and metals.

7. The pumping apparatus of claim 6 or any one of the above claims, wherein the metal is steel.

8. The pumping apparatus of claim 1 or any one of the above claims, wherein the diamond-like carbon coating (2) has a coating thickness ranging from 0.1 to 10, preferably from 0.2 to 5, micrometer.

9. The pumping apparatus according to claim 1 or any one of the above claims, adapted to perform liquid pumping in a liquid chromatography device, in particular in a high pressure liquid chromatography device.

10. The pumping apparatus according to claim 1 or any one of the above claims, wherein said high pressure ranges from 200 to 2000 bar.

11. The pumping apparatus according to claim 1 or any one of the above claims, wherein the liquid is pumped at a selectable flow rate.

12. A high pressure liquid chromatography device comprising a liquid pumping apparatus according to claim 1 or any one of the above claims, adapted to perform injecting of liquid into a chromatograph, said pumping apparatus comprising:
a piston (1) for reciprocation in a pump working chamber (3),
a valve, coupled to said pump working chamber (3), to permit liquid flow only unidirectional,
a drive unit for reciprocating said piston (1), wherein:
- the liquid in said pump working chamber (3) is compressed to a high pressure,
- said piston (1) is at least partially coated with a diamond-like carbon coating (2), adapted to provide a reduced abrasion of the piston (1).

## Amended claims

### Amended claims in accordance with Rule 137(2) EPC.

**1.** A high performance liquid chromatography pumping apparatus adapted to perform liquid pumping in a high performance liquid chromatography device, the pumping apparatus comprising
a piston (1) for reciprocation in a pump working chamber (3),
a valve, coupled to said pump working chamber (3), to permit liquid flow only unidirectional,
a drive unit for reciprocating said piston (1),
wherein:
- the liquid in said pump working chamber (3) is compressed to a high pressure, at which compressibility of the liquid becomes noticeable, and
- said piston (1) is at least partially coated with a diamond-like carbon coating (2), adapted to provide a reduced abrasion of the piston (1).

**2.** The pumping apparatus of claim 1 or any one of the above claims, wherein the pump working chamber (3) has an inlet port (4')and an outlet port (5').

**3.** The pumping apparatus of claim 1 or any one of the above claims, wherein the valve is an inlet valve (13).

**4.** The pumping apparatus of claim 1 or any one of the above claims, wherein the drive unit comprises a piston holder (6) to which the piston (1) is mounted.

**5.** The pumping apparatus of claim 1 or any one of the above claims, comprising at least one of:
two pistons arranged in one of a dual serial or dual parallel mode, adapted to provide a continuous pumping by performing pump cycles;
a first piston for reciprocation in a first pump working chamber having an inlet port and an outlet port;
a second piston for reciprocation in a second pump working chamber having an inlet port and an outlet port,
a conduit coupling between an outlet port of a first pump working chamber and an inlet port of a second pump working chamber to provide a liquid communication from a first pump working chamber into a second pump working chamber;
an inlet valve connected to an inlet port of a first pump working chamber to permit liquid flow only unidirectional into said first pump working chamber;
the outlet valve connected to the outlet port of the first pump working chamber to permit liquid flow only unidirectional into said second pump working chamber;
the drive unit for reciprocating the first and the second piston,
wherein:
- the liquid in the first pump working chamber is compressed to said high pressure before delivery of the compressed liquid into the second pump working chamber,
- at least one of said first and second pistons that are reciprocated into said first and second working chambers, is at least partially coated with a diamond-like carbon coating, adapted to provide a reduced abrasion of the piston.

**6.** The pumping apparatus of claim 1 or any one of the above claims, wherein the piston (1) is made of one of the following: sapphire, ceramics and metals.

**7.** The pumping apparatus of claim 6 or any one of the above claims, wherein the metal is steel.

**8.** The pumping apparatus of claim 1 or any one of the above claims, wherein the diamond-like carbon coating (2) has a coating thickness ranging from 0.1 to 10, preferably from 0.2 to 5, micrometer.

**9.** The pumping apparatus according to claim 1 or any one of the above claims, wherein said high pressure ranges from 200 to 2000 bar.

**10.** The pumping apparatus according to claim 1 or any one of the above claims, wherein the liquid is pumped at a selectable flow rate.
